Europäisches Patentamt

European Patent Office

Office européen des brevets

(19)

(11) **EP 0 837 357 A2**

(12) **EUROPÄISCHE PATENTANMELDUNG**

(43) Veröffentlichungstag:
22.04.1998 Patentblatt 1998/17

(51) Int. Cl.⁶: $G02F\ 1/35$, $G02F\ 3/00$

(21) Anmeldenummer: 97117713.4

(22) Anmeldetag: 13.10.1997

(84) Benannte Vertragsstaaten:
AT BE CH DE DK ES FI FR GB GR IE IT LI LU MC NL PT SE
Benannte Erstreckungsstaaten:
AL LT LV RO SI

(30) Priorität: 17.10.1996 DE 19642904

(71) Anmelder: Stehr, Ernst-August
08280 Aue (DE)

(72) Erfinder: **Stehr, Ernst-August**
08280 Aue (DE)

(74) Vertreter: **Goddar, Heinz J., Dr.**
**FORRESTER & BOEHMERT**
**Franz-Joseph-Strasse 38**
**80801 München (DE)**

(54) **Verfahren und Vorrichtung zum Modulieren von Licht**

(57) Die Erfindung betrifft ein Verfahren zum Modulieren von Licht, bei dem ein erstes Lichtbündel, umfassend mindestens einen ersten Lichtstrahl, sowie ein zweites Lichtbündel, umfassend mindestens einen zweiten Lichtstrahl, in ein dispersives Medium mit nicht-linearem optischen Verhalten eintreten und mindestens ein dritter Lichtstrahl aus dem dispersiven Medium austritt, wobei der Brechungsindex des dispersiven Mediums durch die Ein/Aus-Zeit, die Frequenz und/oder die Amplitude des zumindest einen ersten Lichtstrahls variiert und somit das zweite Lichtbündel zum Bilden des dritten Lichtstrahls nach Durchlaufen des dispersiven Mediums in seiner Amplitude, seiner Frequenz, seinem Austrittsort und/oder seiner Austrittsrichtung moduliert wird, sowie eine Vorrichtung zum Modulieren, von Licht, in einem der vorangehenden Ansprüche, umfassend ein dispersives Medium, das ein nicht-lineares optisches Verhalten aufweist und zwischen einem ersten Lichtbündel, umfassend zumindest einen ersten Lichtstrahl, über den der Brechungsindex des dispersiven Mediums variierbar ist, und einem zweiten Lichtbündel, umfassend zumindest einen zweiten Lichtstrahl so angeordnet ist, daß zumindest ein dritter aus dem dispersiven Medium austretender Lichtstrahl sich abhängig vom Berechnungsindex vom zweiten Lichtbündel in Amplitude, Frequenz, Austrittsort und/oder Austrittsrichtung unterscheidet.

Fig.1

## Beschreibung

Die Erfindung betrifft ein Verfahren und eine Vorrichtung zum Modulieren von Licht, insbesondere zum Verstärken, Filtern und/oder Analysieren von Licht und/oder zum Schalten mittels Licht.

Einerseits kommt elektromagnetische Strahlung, bspw. sichtbares Licht oder Infrarotlicht, immer häufiger in einer Vielzahl von Vorrichtungen zum Einsatz. Dabei wird unter anderem ausgenutzt, daß Licht monochromatisch, in Form von Laserstrahlen, zur Verfügung steht und leicht zu einer gewünschten Farbe gemischt sowie beliebige Farben wieder in Grundfarben entmischt werden können. So wird heutzutage eine Datenfernübertragung gerne auf optischem Wege durchgeführt, beispielsweise über Glasfaserkabel. Andererseits haben sich informationsverarbeitende Vorrichtungen, wie Mikroprozessoren oder Verstärker, die rein optisch arbeiten, jedoch bis heute noch nicht durchgesetzt.

Ferner sind Materialien bekannt, deren Brechungsindex nicht nur für verschiedenfarbiges Licht verschieden ist, sondern durch einen einfallenden ersten Lichtstrahl für einen weiteren Lichtstrahl aufgrund von nicht-linearen Effekten tatsächlich variierbar ist. So ist beispielsweise bei Bestrahlung eines sogenannten photorefraktiven Materials mit einem Lichtstrahl einer ersten Wellenlänge und einem Lichtstrahl einer zweiten Wellenlänge der Brechungsindex für den Lichtstrahl der zweiten Wellenlänge verschieden von dem, der vorliegen würde, wenn nur der Lichtstrahl der zweiten Wellenlänge auftreffen würde.

Aufgabe der Erfindung ist, ein Verfahren und eine Vorrichtung zum einfachen und schnellen Modulieren von Licht bereitzustellen.

Erfindungsgemäß wird die sich auf das Verfahren beziehende Aufgabe durch ein Verfahren zum Modulieren von Licht gelöst, bei dem ein erstes Lichtbündel, umfassend mindestens einen ersten Lichtstrahl, sowie ein zweites Lichtbündel, umfassend mindestens einen zweiten Lichtstrahl, in ein dispersives Medium mit nicht-linearem optischen Verhalten eintreten und mindestens ein dritter Lichtstrahl aus dem dispersiven Medium austritt, wobei der Brechungsindex des dispersiven Mediums durch die Ein/Aus-Zeit, die Frequenz und/oder die Amplitude des zumindest einen ersten Lichtstrahls variiert und somit das zweite Lichtbündel zum Bilden des dritten Lichtstrahls nach Durchlaufen des dispersiven Mediums in seiner Amplitude, seiner Frequenz, seinem Austrittsort und/oder seiner Austrittsrichtung moduliert wird.

Dabei kann erfindungsgemäß vorgesehen sein, daß mehrere monochromatische zweite Lichtstrahlen, vorzugsweise in Grundfarben, verwendet werden.

Die Erfindung kann weiterhin vorsehen, daß die zweiten Lichtstrahlen, vorzugsweise individuell, gepulst werden.

Die zweiten Lichtstrahlen können parallel zueinander verlaufen.

Auch schlägt die Erfindung vor, daß als erster Lichtstrahl ein monochromatischer Lichtstrahl verwendet wird.

Ein dritter Lichtstrahl kann auch als monochromatisches Licht erzeugt werden gemäß der Erfindung.

Eine erfindungsgemäße Weiterentwicklung ist dadurch gekennzeichnet, daß über den Austrittsort und/oder die Austrittsrichtung für einen dritten Lichtstrahl dessen Farbe, ggf. entsprechend der des ersten Lichtstrahls, ausgewählt wird.

Auch kann über den Austrittsort und/oder die Austritts-richtung für einen dritten Lichtstrahl dessen Intensität ausgewählt werden.

Die Erfindung schlägt weiterhin vor, daß durch das Modulieren des zweiten Lichtbündels dasselbe über den zumindest einen dritten Lichtstrahl analysiert wird.

Es kann ferner vorgesehen sein, daß das Modulieren von einem von außen angelegten Feld beeinflußt wird.

Dabei wird nach der Erfindung vorgeschlagen, daß ein elektrisches Feld, ein magnetisches Feld und/oder ein Verzerrungsfeld an das dispersive Medium angelegt wird.

Ferner schlägt die Erfindung vor, daß die Anordnung des dispersiven Mediums relativ zu dem ersten Lichtbündel, dem zweiten Lichtbündel und dem zumindest einen dritten Lichtstrahl in einem Ätzverfahren festgelegt wird.

Erfindungsgemäß kann weiterhin vorgesehen sein, daß zur Vermeidung einer Farbentmischung durch frequenzabhängige Lichtgeschwindigkeiten außerhalb des dispersiven Mediums, insbesondere mathematische, Korrekturen durchgeführt werden.

Ferner schlägt die Erfindung vor, daß zur Vermeidung einer Farbverzerrung das erste Lichtbündel, das zweite Lichtbündel und/oder der zumindest eine dritte Lichtstrahl kontinuierlich auf einem bestimmten Lichtintensitätsniveau, vorzugsweise jeweils über mindestens einen Regulator gehalten, wird.

Die sich auf die Vorrichtung beziehende Aufgabe wird erfindungsgemäß durch eine Vorrichtung zum Modulieren von Licht, insbesondere verwendend ein Verfahren nach der Erfindung, umfassend ein dispersives Medium, das ein nicht-lineares optisches Verhalten aufweist und zwischen einem ersten Lichtbündel, umfassend zumindest einen ersten Lichtstrahl, über den der Brechungsindex des dispersiven Mediums variierbar ist, und einem zweiten Lichtbündel, umfassend zumindest einen zweiten Lichtstrahl, so angeordnet ist, daß zumindest ein dritter aus dem dispersiven Medium austretender Lichtstrahl sich abhängig vom Brechungsindex vom zweiten Lichtbündel in Amplitude, Frequenz, Austrittsort und/oder Austrittsrichtung unterscheidet, gelöst.

Dabei kann vorgesehen sein, daß das dispersive Medium ein photorefraktives Material umfaßt.

Bevorzugt ist dabei gemäß der Erfindung, daß das photorefraktive Material Silizium, Galliumarsenid, Lithiumniobat, Bariumtitanat oder 2-Zyklooktylamino-5-Nitropyridin dotiert mit 7,7,8,8-Tetrazyanoquinodimethan umfaßt.

Auch schlägt die Erfindung vor, daß ein Lichtleiter für das erste und/oder zweite Lichtbündel jeweils zumindest eine Glasfaser umfaßt.

Erfindungsgemäß kann vorgesehen sein, daß durch die Anordnung einer weitern Glasfaser als Lichtleiter für den dritten Lichtstrahl dessen Austrittsort und Austrittsrichtung einstellbar ist.

Weiterhin kann vorgesehen sein, daß jeder erste und/oder zweite Lichtstrahl ein Laserstrahl ist.

Die Erfindung schlägt auch vor, daß das zweite Lichtbündel mehrere monochromatische, vorzugsweise parallel zueinander verlaufende, zweite Lichtstrahlen umfaßt.

Auch kann vorgesehen sein, daß die Ein/Aus-Zeit der zweiten Lichtstrahlen, vorzugsweise individuell, einstellbar ist.

Erfindungsgemäß ist weiterhin vorgeschlagen, daß an das dispersive Medium ein elektrisches Feld, ein magnetisches Feld und/oder ein Verzerrungsfeld zum Beeinflussen des nicht-linearen Verhaltens desselben, zumindest zeitweise, anlegbar ist.

Ferner schlägt die Erfindung vor, daß die Anordnung für das dispersive Medium und Lichtleiter in einem Ätzverfahren hergestellt ist.

Eine erfindungsgemäße Ausführungsform ist dadurch gekennzeichnet, daß ein Verstärker bereitgestellt ist, wobei das zweite Lichtbündel eine höhere Intensität als das erste Lichtbündel aufweist und der zumindest eine dritte Lichtstrahl die gleiche Farbe wie das erste Lichtbündel aufweist.

Gemäß anderer Ausführungsformen kann ein n-Wege-Schalter und/oder Farbschalter und/oder ein ODER-Gate und/oder ein Filter bereitgestellt sein, der bzw. das abhängig von der Amplitude und/oder Frequenz des dritten Lichtstrahls an einem ausgewählten Austrittsort, ggf. mit einer ausgewählten Austrittsrichtung, arbeitet.

Dabei kann vorgesehen sein, daß der n-Wege-Schalter ein Ein-Aus-Schalter ist.

Alternativerweise kann auch vorgesehen sein, daß das zweite Lichtbündel m zweite, monochromatische Lichtstrahlen umfaßt, die individuell ein- und ausschaltbar sind, und $n = 2^m$.

Eine weitere Ausführungsform der Erfindung ist dadurch gekennzeichnet, daß ein Lichtsender bereitgestellt ist, wobei das zweite Lichtbündel über mehrere zweite Lichtstrahlen mehrere Frequenzen umfaßt und die Frequenz(en) des zumindest einen dritten Lichtstrahls über dessen Austrittsort und/oder die Austrittsrichtung einstellbar ist bzw. sind.

Es kann nach der Erfindung auch vorgesehen sein, daß über den dritten Lichtstrahl das zweite Lichtbündel analysierbar ist.

Erfindungsgemäß kann die Vorrichtung ferner ein optisches System, insbesondere ein Linsensystem, umfassen, über das zur Vermeidung einer Farbentmischung durch frequenzabhängige Lichtgeschwindigkeiten außerhalb des dispersiven Mediums Korrekturen durchführbar sind.

Ferner schlägt die Erfindung vor, daß in dem ersten Lichtbündel, dem zweiten Lichtbündel und/oder dem zumindest einen dritten Lichtstrahl mindestens ein Regulator bereitgestellt ist, der zur Vermeidung einer Farbverzerrung kontinuierlich auf ein bestimmtes Lichtintensitätsniveau regelt.

Weitere Merkmale und Vorteile der Erfindung ergeben sich aus der nachfolgenden Beschreibung, in der Ausführungsbeispiele der Erfindung anhand von schematischen Zeichnungen im einzelnen erläutert sind. Dabei zeigt:

Fig. 1    eine Schnittansicht eines erfindungsgemäßen Lichtverstärkers und -schalters; und

Fig. 2    eine Schnittansicht eines erfindungsgemäßen Lichtsenders.

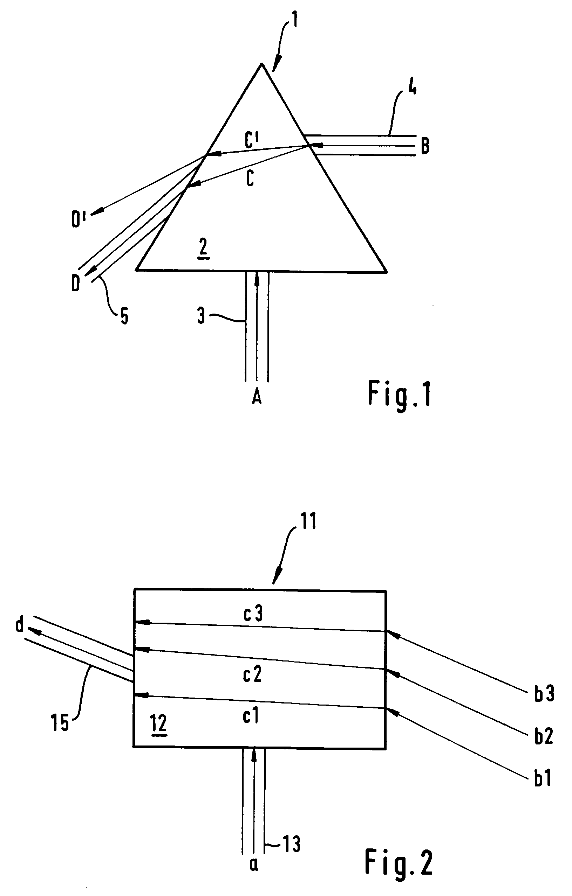

Wie Fig. 1 zu entnehmen ist, ist das Kernstück des Lichtverstärkers und -schalters 1 gemäß einer Ausführungsform der Erfindung ein Kristall 2, beispielsweise aus Silizium, auf den zwei Lichtstrahlen A und B gleicher Wellenlänge jeweils über eine Glasfaser 3 bzw. 4 auftreffen. Dabei ist der Strahlengang des ersten Lichtstrahls A der Klarheit zuliebe nur bis zum Eintreten in den Einkristall 2 dargestellt, während der Strahlengang des zweiten Lichtstrahls B im Einkristall 2 mit C bzw. C′ und nach Durchlaufen desselben mit D bzw. D′ gekennzeichnet ist.

Der zweite Lichtstrahl B wird aufgrund des durch den ersten Lichtstrahl A beeinflußten Brechungsindex des Kristalls 2 in den dritten Lichtstrahl D über den Lichtstrahl C gebrochen, der in einer Glasfaser 5 fortschreitet.

Trifft jedoch kein erster Lichtstrahl A auf den Kristall 2 auf, wird der Brechungsindex des Kristalls 2 nicht geändert und der zweite Lichtstrahl B in den Lichtstrahl D′ über den Lichtstrahl C′ gebrochen.

Die Vorrichtung 1 funktioniert als Lichtverstärker und -schalter im Prinzip wie ein Transistor, wobei die Glasfaser 3 den BASIS-Anschluß, die Glasfaser 4 den KOLLEKTOR-Anschluß und die Glasfaser 5 den EMITTER-Anschluß darstellt. Sobald nämlich der erste Lichtstrahl A in den Einkristall 2 eintritt, ändert sich dessen Brechungsindex, so daß dann der zweite Lichtstrahl B, der zwar die gleiche Farbe, aber eine höhere Intensität als der erste Lichtstrahl aufweist, anstatt in den Lichtstrahl D′ in den dritten Lichtstrahl D gebrochen wird, um in die dritte Glasfaser 5 zu gelangen.

Natürlich können mehrere Vorrichtungen 1 zum Bilden eines Prozessors miteinander kombiniert werden.

Fig. 2 zeigt einen Lichtsender 11, dessen Kernstück wiederum ein Kristall 12, beispielsweise aus Bariumtitanat, ist, in den ein erster Lichtstrahl a über eine Glasfaser 13 zu Modulationszwecken eintritt. Der Strahlengang des ersten Lichtstrahls a ist jedoch der Übersichtlichkeit zuliebe nicht innerhalb des Kristalls 12 und aus demselben austretend dargestellt. In den Kristall 12 tritt ferner ein Lichtbündel aus drei monochromatischen, parallel zueinander verlaufenden zweiten Lichtstrahlen b1, b2 und b3 mit unterschiedlichen Frequenzen, in drei Grundfarben, ein. Die zweiten Lichtstrahlen b1, b2 und b3 werden über den durch den ersten Lichstrahl a einstellbaren Brechungsindex des Kristalls 12 in drei Lichtstrahlen c1, c2 und c3 beim Eintritt in den Kristall 12 gebrochen. Diese drei Lichtstrahlen c1, c2 und c3 werden beim Austritt aus dem Kristall 12 in drei nicht gezeigte Lichtstrahlen gebrochen, so daß in einer Glasfaser 15 ein dritter Lichtstrahl d entsteht, dessen Farbe und Intensität sich, je nach von der Anordnung der Glasfaser 15 vorgegebenem Austrittsort und vorgegebender Austrittsrichtung für den dritten Lichtstrahl d, aus den drei Grundfarben der dritten Lichtstrahlen b1, b2 und b3 bzw. deren Intensitäten zusammensetzt.

Somit stellt der Lichtsender 11 im wesentlichen einen Farbmischer dar, der aus den drei monochromatischen zweiten Lichtstrahlen b1, b2 und b3 bei Verwendung eines bestimmten ersten Lichtstrahls a eine gewünschte, variierbare Farbmischung für den dritten Lichtstrahl d erzeugt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

## Bezugszeichenliste

| 1 | Lichtverstärker und -schalter |
|---|---|
| 2 | Siliziumeinkristall |
| 3 | Glasfaser |
| 4 | Glasfaser |
| 5 | Glasfaser |
| 11 | Lichtsender |
| 12 | Siliziumeinkristall |
| 13 | Glasfaser |
| 15 | Glasfaser |
| A | erster Lichtstrahl |
| a | erster Lichtstrahl |
| B | zweiter Lichtstrahl |
| b1 | zweiter Lichtstrahl |
| b2 | zweiter Lichtstrahl |
| b3 | zweiter Lichtstrahl |
| C | Lichtstrahl |
| C' | Lichtstrahl |
| c1 | Lichtstrahl |
| c2 | Lichtstrahl |
| c3 | Lichtstrahl |
| D | dritter Lichtstrahl |
| d | dritter Lichtstrahl |
| D' | Lichtstrahl |

## Patentansprüche

1. Verfahren zum Modulieren von Licht, bei dem ein erstes Lichtbündel, umfassend mindestens einen ersten Lichtstrahl, sowie ein zweites Lichtbündel, umfassend mindestens einen zweiten Lichtstrahl, in ein dispersives Medium mit nicht-linearem optischen Verhalten eintreten und mindestens ein dritter Lichtstrahl aus dem dispersiven Medium austritt, wobei der Brechungsindex des dispersiven Mediums durch die Ein/Aus-Zeit, die Frequenz und/oder die Amplitude des zumindest einen ersten Lichtstrahls variiert und somit das zweite Lichtbündel zum Bilden des dritten Lichtstrahls nach Durchlaufen des dispersiven Mediums in seiner Amplitude, seiner Frequenz, seinem Austrittsort und/oder seiner Austrittsrichtung moduliert wird.

2. Verfahren nach Anspruch 1, dadurch gekennzeichnet, daß mehrere monochromatische zweite Lichtstrahlen, vorzugsweise in Grundfarben, verwendet werden.

3. Verfahren nach Anspruch 2, dadurch gekennzeichnet, daß die zweiten Lichtstrahlen, vorzugsweise individuell, gepulst werden.

4. Verfahren nach Anspruch 2 oder 3, dadurch gekennzeichnet, daß die zweiten Lichtstrahlen parallel zueinander verlaufen.

5. Verfahren nach einem der vorangehenden Ansprüche, dadurch gekennzeichnet, daß als erster Lichtstrahl ein monochromatischer Lichtstrahl verwendet wird.

6. Verfahren nach einem der vorangehenden Ansprüche, dadurch gekennzeichnet, daß ein dritter Lichtstrahl als monochromatisches Licht erzeugt wird.

7. Verfahren nach einem der vorangehenden Ansprüche, dadurch gekennzeichnet, daß über den Austrittsort und/oder die Austrittsrichtung für einen dritten Lichtstrahl dessen Farbe, ggf. entsprechend der des ersten Lichtstrahls, ausgewählt wird.

8. Verfahren nach einem der vorangehenden Ansprüche, dadurch gekennzeichnet, daß über den Austrittsort und/oder die Austrittsrichtung für einen dritten Lichtstrahl dessen Intensität ausgewählt wird.

9. Verfahren nach einem der vorangehenden Ansprüche, dadurch gekennzeichnet, daß durch das Modulieren des zweiten Lichtbündels dasselbe über den zumindest einen dritten Lichtstrahl analy-

10. Verfahren nach einem der vorangehenden Ansprüche, dadurch gekennzeichnet, daß das Modulieren von einem von außen angelegten Feld beeinflußt wird.

11. Verfahren nach Anspruch 10, dadurch gekennzeichnet, daß ein elektrisches Feld, ein magnetisches Feld und/oder ein Verzerrungsfeld an das dispersive Medium angelegt wird.

12. Verfahren nach einem der vorangehenden Ansprüche, dadurch gekennzeichnet, daß die Anordnung des dispersiven Mediums relativ zu dem ersten Lichtbündel, dem zweiten Lichtbündel und dem zumindest einen dritten Lichtstrahl in einem Ätzverfahren festgelegt wird.

13. Verfahren nach einem der vorangehenden Ansprüche, dadurch gekennzeichnet, daß zur Vermeidung einer Farbentmischung durch frequenzabhängige Lichtgeschwindigkeiten außerhalb des dispersiven Mediums, insbesondere mathematische, Korrekturen durchgeführt werden.

14. Verfahren nach einem der vorangehenden Ansprüche, dadurch gekennzeichnet, daß zur Vermeidung einer Farbverzerrung das erste Lichtbündel, das zweite Lichtbündel und/oder der zumindest eine dritte Lichtstrahl kontinuierlich auf einem bestimmten Lichtintensitätsniveau, vorzugsweise jeweils über mindestens einen Regulator, gehalten wird.

15. Vorrichtung zum Modulieren von Licht, insbesondere verwendend ein Verfahren nach einem der vorangehenden Ansprüche, umfassend ein dispersives Medium (2, 12), das ein nicht-lineares optisches Verhalten aufweist und zwischen einem ersten Lichtbündel, umfassend zumindest einen ersten Lichtstrahl (A, a), über den der Brechungsindex des dispersiven Mediums (2, 12) variierbar ist, und einem zweiten Lichtbündel, umfassend zumindest einen zweiten Lichtstrahl (B, b1, b2, b3), so angeordnet ist, daß zumindest ein dritter aus dem dispersiven Medium austretender Lichtstrahl (D, d) sich abhängig vom Berechnungsindex vom zweiten Lichtbündel (B, b1, b2, b3) in Amplitude, Frequenz, Austrittsort und/oder Austrittsrichtung unterscheidet.

16. Vorrichtung nach Anspruch 15, dadurch gekennzeichnet, daß das dispersive Medium (2, 12) ein photorefraktives Material umfaßt.

17. Vorrichtung nach Anspruch 16, dadurch gekennzeichnet, daß das photorefraktive Material (2, 12) Silizium, Galliumarsenid, Lithiumniobat, Bariumtitanat oder 2-Zyklooktylamino-5-Nitropyridin dotiert mit 7,7,8,8-Tetrazyanoquinodimethan umfaßt.

18. Vorrichtung nach einem der Ansprüche 15 bis 17, dadurch gekennzeichnet, daß ein Lichtleiter für das erste und/oder zweite Lichtbündel (A, a, B, b1, b2, b3) jeweils zumindest eine Glasfaser (3, 13, 4) umfaßt.

19. Vorrichtung nach einem der Ansprüche 15 bis 18, dadurch gekennzeichnet, daß durch die Anordnung einer weitern Glasfaser (5, 15) als Lichtleiter für den dritten Lichtstrahl (D, d) dessen Austrittsort und Austrittsrichtung einstellbar ist.

20. Vorrichtung nach einem der Ansprüche 15 bis 19, dadurch gekennzeichnet, daß jeder erste und/oder zweite Lichtstrahl (A, a, B, b1, b2, b3) ein Laserstrahl ist.

21. Vorrichtung nach einem der Ansprüche 15 bis 20, dadurch gekennzeichnet, daß das zweite Lichtbündel mehrere monochromatische, vorzugsweise parallel zueinander verlaufende, zweite Lichtstrahlen (b1, b2, b3) umfaßt.

22. Vorrichtung nach Anspruch 21, dadurch gekennzeichnet, daß die Ein/Aus-Zeit der zweiten Lichtstrahlen (b1, b2, b3), vorzugsweise individuell, einstellbar ist.

23. Vorrichtung nach einem der Ansprüche 15 bis 22, dadurch gekennzeichnet, daß an das dispersive Medium (2, 12) ein elektrisches Feld, ein magnetisches Feld und/oder ein Verzerrungsfeld zum Beeinflussen des nicht-linearen Verhaltens desselben, zumindest zeitweise, anlegbar ist.

24. Vorrichtung nach einem der Ansprüche 15 bis 23, dadurch gekennzeichnet, daß die Anordnung für das dispersive Medium (2, 12) und Lichtleiter ( 3, 13, 4, 5, 15) in einem Ätzverfahren hergestellt ist.

25. Vorrichtung nach einem der Ansprüche 15 bis 24, dadurch gekennzeichnet, daß ein Verstärker (1) bereitgestellt ist, wobei das zweite Lichtbündel (B) eine höhere Intensität als das erste Lichtbündel (A) aufweist und der zumindest eine dritte Lichtstrahl (D) die gleiche Farbe wie das erste Lichtbündel (A) aufweist.

26. Vorrichtung nach einem der Ansprüche 15 bis 25, dadurch gekennzeichnet, daß ein n-Wege-Schalter (1) und/oder Farbschalter und/oder ein ODER-Gate und/oder ein Filter bereitgestellt ist, der bzw. das abhängig von der Amplitude und/oder Frequenz des dritten Lichtstrahls (D) an einem ausgewählten Austrittsort, ggf. mit einer ausgewählten Austritts-

richtung, arbeitet.

27. Vorrichtung nach Anspruch 26, dadurch gekennzeichnet, daß der n-Wege-Schalter (1) ein Ein-Aus-Schalter ist.

28. Vorrichtung nach Anspruch 26, dadurch gekennzeichnet, daß das zweite Lichtbündel m zweite, monochromatische Lichtstrahlen umfaßt, die individuell ein- und ausschaltbar sind, und $n = 2^m$.

29. Vorrichtung nach einem der Ansprüche 15 bis 28, dadurch gekennzeichnet, daß ein Lichtsender (11) bereitgestellt ist, wobei das zweite Lichtbündel über mehrere zweite Lichtstrahlen (b1, b2, b3) mehrere Frequenzen umfaßt und die Frequenz(en) des zumindest einen dritten Lichtstrahls (d) über dessen Austrittsort und/oder die Austrittsrichtung einstellbar ist bzw. sind.

30. Vorrichtung nach einem der Ansprüche 15 bis 29, dadurch gekennzeichnet, daß über den dritten Lichtstrahl das zweite Lichtbündel analysierbar ist.

31. Vorrichtung nach einem der Ansprüche 15 bis 30, gekennzeichnet durch ein optisches System, insbesondere ein Linsensystem, über das zur Vermeidung einer Farbentmischung durch frequenzabhängige Lichtgeschwindigkeiten außerhalb des dispersiven Mediums (2, 12) Korrekturen durchführbar sind.

32. Vorrichtung nach einem der Ansprüche 15 bis 31, dadurch - gekennzeichnet, daß in dem ersten Lichtbündel (A, a), dem zweiten Lichtbündel (B, b1, b2, b3) und/oder dem zumindest einem dritten Lichtstrahl (D, d) mindestens ein Regulator bereitgestellt ist, der zur Vermeidung einer Farbverzerrung kontinuierlich auf ein bestimmtes Lichtintensitätsniveau regelt.

Fig.1

Fig.2

7